# EUROPEAN PATENT APPLICATION

(11) **EP 2 314 944 A2**
(43) Date of publication of application: **27.04.2011**
(21) Application number: 10175665.8
(22) Date of filing: 07.09.2010
(51) Int. Cl.: F24F 11/00

(54) **An overpressure-based system to protect vertical evacuation routes against smoke infiltration**

(30) Priority: 20.10.2009 PL 38931509
(71) Applicant: Smay Sp. z.o.o., 31- 587 Krakow (PL)
(72) Inventor: Wiche, Jaroslaw, 31-798 Kraków (PL); Zapala, Robert, 32-444 Glogoczów (PL); Sypek, Grzegorz, 30-864 Kraków (PL); Maj, Marek, 32-095 Iwanowice (PL)
(74) Representative: Grzaka, Andrzej

(57) **Abstract**

The present Invention relates to an overpressure-based system applied to protect vertical evacuation routes against smoke infiltration, that can be used in the objects such as hospitals or laboratories, where it is necessary to accurately maintain the pressure difference between two zones on a preset level, **characterised in that** the system's controlling & working unit **14** is connected with the upper fan's frequency converter **19** through the upper fan's controller **15,** and, next, through the reversible upper fan **4,** and this system's unit is also connected with the upper fan's frequency converter **20** through the lower fan's controller **16,** and, next, with the reversible lower fan **5.**

## Description

The present Invention relates to an overpressure-based system applied to protect vertical evacuation routes against smoke infiltration. The Invention makes it possible to limit or to fully eliminate the phenomenon of thermal draught that occurs, particularly intensely, in staircases of high or high-rise buildings. Moreover, the system according to this Invention can be used in the objects such as hospitals or laboratories, where it is necessary to accurately maintain the pressure difference between two zones on a preset level (e.g. room - room; room - air supply/return air duct).

A phenomenon of thermal draught occurring in high and high-rise buildings depends on a temperature difference in the external and internal space of those buildings. In the hitherto systems, a multi-inlet system of air blowing was utilized, with air inlets arranged evenly along the vertical line of staircases; however, this system has not overcome the thermal draught phenomenon. The commonly known systems of controlling pressures function on the basis of air bleed flaps and multi-inlet system of air blowing.

The purpose of this Invention is to eliminate the thermal draught phenomenon occurring while admitting air into vertical evacuation routes. Additionally, this Invention aims at solving the issue of controlling air admission into vertical evacuation routes and at making it possible to quickly change volumetric flow of air and to maintain various levels of preset air pressure. This Invention solves the problem of maintaining a required overpressure level of 50 Pa +/-10% within the entire vertical evacuation route. -/-

The essence of the Invention is an overpressure-based system to protect vertical evacuation routes against smoke infiltration. Its characteristic features are as follows: - a system's controlling & working unit is connected with frequency converters of upper and lower fans through controllers of upper and lower fans, and, then, with reversible upper and lower fans; - an input card of upper fan's controller is connected with the system's controlling & working unit through an upper fan's controller; - an input card of lower fan's controller is connected with the system's controlling & working unit through a lower fan's controller; - a system's controlling & working unit is connected with the upper and lower pressure-regulating governors through upper and lower controlling units; - upper and lower pressure sensors, placed in the upper and lower (respectively) air admitting ducts, are connected with the system's controlling & working unit through an input card of upper fan's controller, and next, through the upper fan's controller; - sensors of the internal and external temperature are connected with the system's controlling & working unit through an input card of lower fan's controller, and next, through a lower fan's controller. **Preferably,** the upper and lower pressure sensors, placed in the upper and lower (respectively) air admitting ducts, are connected with the system's controlling & working unit through the input card of upper fan's controller, and, next, through the upper fan's controller; - the sensors of internal and external temperature are connected with the system's controlling & working unit through the input card of upper fan's controller, and, next, through the upper fan's controller. **Preferably,** the upper and lower pressure sensors, placed in the upper and lower (respectively) air admitting ducts, are connected with the system's controlling & working unit through the input card of the lower fan's controller, and, next, through the lower fan's controller; - the sensors of internal and external temperatures are connected with the system's controlling & working unit through the input card of the lower fan's controller, and, next, through the lower fan's controller. **Preferably,** the upper and lower pressure sensors, placed in the upper and lower (respectively)air admitting ducts, are connected with the system's controlling & working unit through the input card of the lower fan's controller, and, next, through the lower fan's controller; - the sensors of the internal and external temperature are connected with the system's controlling & working unit through the input card of the upper fan's controller, and, next, through the upper fan's controller. **Preferably,** in the case where the external temperature is higher than the internal temperature, the system activates the blowing function of the upper reversible fan and of the upper pressure-regulating governor, as well as the exhaust function of the reversible lower fan and the lower pressure-regulating governor. **Preferably,** in the event where the external temperature is lower than or equal the internal temperature, the system activates the exhaust function of the reversible upper fan and of the upper pressure-regulating governor, and the blowing function of the reversible lower fan and of the lower pressure-regulating governor. **Preferably,** the air flow inside the vertical evacuation route is controlled based on the information acquired from the sensors of internal and external temperatures and from the upper and lower pressure-regulating governors since this information forces a preset distribution of pressures not exceeding 50 Pa +/-10%.

The advantage of the system according to this Invention is that the system automatically adapts to any weather conditions and to any height of the building, especially as regards the buildings higher than 22 m. Owing to the system according to this Invention, within the entire vertical evacuation route, a required overpressure value of 50 Pa +/- 10% is maintained in relation to the useable area; this pressure value prevents smoke from entering into the evacuation route. Another advantage of the system according to this Invention is that both the air pressure and the air flow are continuously controlled and accurately adjusted so that it is possible to reach very quickly, within less than 3 seconds, the preset level of air flow volume through the evacuation door. Consequently, the system according to this Invention, protects against any uncontrolled increase or uncontrolled decrease in the pressure; should the air pressure increase, the door in the evacuation route could be blocked shut, and should the air pressure decrease, the smoke could enter into the evacuation route.

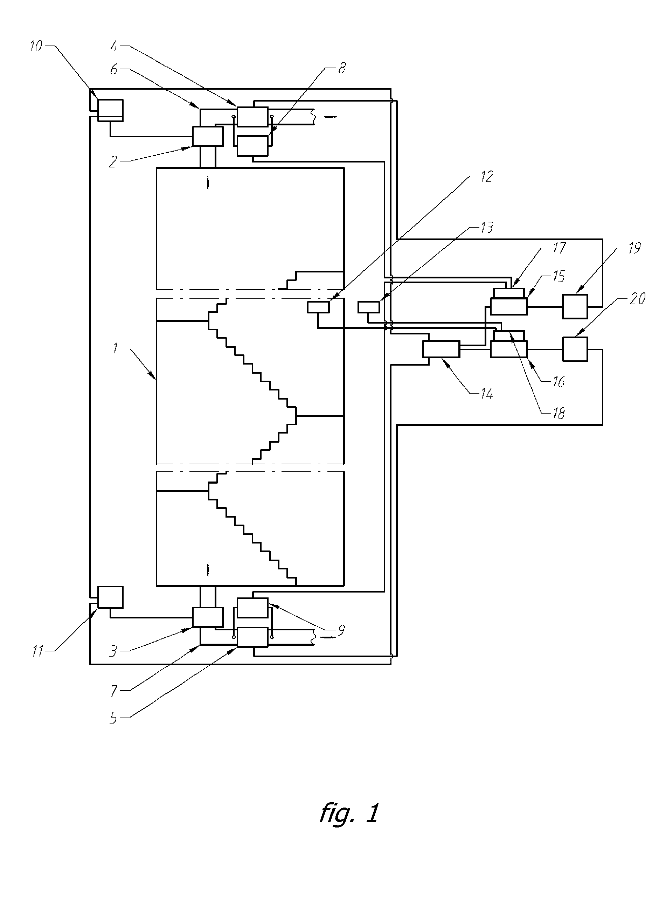

The object according to this Invention is represented in the Figure attached. In this Figure, fig. 1 shows a schematic diagram of the overpressure-based system of protecting vertical evacuation routes against smoke infiltration.

The system according to this Invention consists of a vertical evacuation route **1**, upper pressure-regulating governor **2**, lower pressure-regulating governor **3**, reversible upper fan **4,** reversible lower fan **5**, upper air admitting duct **6**, lower air admitting duct **7**, upper pressure sensor **8**, lower pressure sensor **9**, both of them placed in the upper and lower air admitting ducts **6** and **7**, controller of upper pressure-controlling governor **10**, controller of lower pressure-controlling governor **11**, internal temperature sensor **12**, external temperature sensor **13**, system's controlling & working unit **14**, upper fan's controller **15**, lower fan's controller **16**, input card of upper fan's controller **17**, input card of lower fan's controller **18**, upper fan's frequency converter **19**, and lower fan's frequency converter **20**. The system's controlling & working unit **14** is connected with the upper fan's frequency converter **19** through the upper fan's controller **15**, and, next, with the reversible upper fan **4**, and, also, this system's central unit **14** is connected with the lower fan's frequency converter **20** through the lower fan's controller **16**, and, next, with the reversible lower fan **5**. The inlet card of the upper fan's controller **17** is connected with the system's controlling & working unit **14** through the upper fan's controller **15**, and the input card of the lower fan's controller **18** with the system's controlling & working unit **14** through the lower fan's controller **16**. The system's controlling & working unit **14** is also connected with the upper and lower pressure-regulating governors **2** and **3**, respectively, through the controller of the upper pressure-regulating governor **10** and the controller of the lower pressure-regulating governor **11**. The upper and lower pressure sensors **8** and **9**, placed in the upper and lower air admitting ducts **6** and **7**, respectively, are connected with the system's controlling & working unit **14** through the input card of the upper fan's controller **17**, and, next, through the upper fan's controller **15**. lower fan's controller **16**. The internal temperature sensor **12** and the external temperature sensor **13** are connected with the system's controlling & working unit **14** through the input card of the lower fan's controller **18**, and, next, through the lower fan's controller **16**.

In one of the manufactured versions of the system, the upper and lower pressure sensors **8** and **9**, placed in the upper and lower (respectively) air admitting ducts **6** and **7**, are connected with the system's controlling & working unit **14** through the input card of the upper fan's controller **17**, and, next, through the upper fan's controller **15**. The sensor of the internal temperature **12** and the sensor of the external temperature **13** are connected with the system's controlling & working unit **14** through the input card of the upper fan's controller **17**, and, next, through the upper fan's controller **15**.

In the other version of the manufactured system, the upper and lower pressure sensors **8** and **9**, placed in the upper and lower air admitting ducts **6** and **7**, are connected with the system's controlling & working unit **14** through the input card of the lower fan's controller **18**, and, next, through the lower fan's controller **16**. The sensor of the internal temperature **12** and the sensor of the external temperature **13** are connected with the system's controlling & working unit **14** through the input card of the lower fan's controller **18**, and, next, through the lower fan's controller **16**.

There is another version of the system manufactured, where the upper and lower pressure sensors **8** and **9**, placed in the upper and lower air admitting ducts **6** and **7**, are connected with the system's controlling & working unit **14** through the input card of the lower fan's controller **18**, and, next, through the lower fan's controller **16**. The sensor of the internal temperature **12** and the sensor of the external temperature **13** are connected with the system's controlling & working unit **14** through the input card of the upper fan's controller **17**, and, next, through the upper fan's controller **15**.

## Claims

1. An overpressure-based system to control and protect evacuation routes against smoke infiltration, where the space being secured and protected is equipped with at least two pressure-regulating governors, at least two reversible fans, at least two air admitting ducts, at least two pressure sensors, at least two temperature sensors, at least two controllers of pressure-controlling governors, at least two controllers of frequency converters, at least one input card with at least two temperature sensors connected thereto and, also, two pressure sensors, and, at least two frequency converters, **wherein** the system's controlling & working unit **14** is connected with the upper fan's frequency converter **19** through the upper fan's controller **15**, and, next, through the reversible upper fan **4**, and this system's unit is also connected with the upper fan's frequency converter **20** through the lower fan's controller **16**, and, next, with the reversible lower fan **5**. The input card of the upper fan's controller **17** is connected with the system's controlling & working unit **14** through the upper fan's controller, and the input card of the lower fan's controller **18** is connected with the system's controlling & working unit **14** through the lower fan's controller **16**. Moreover, the system's controlling & working unit **14** is connected with the upper and lower pressure-regulating governors **2** and **3** through the upper controller **10** and lower controller **11**; next, the upper and lower pressure sensors **8** and **9**, placed in the upper and lower air admitting ducts **6** and **7**, are connected with the system's controlling & working unit **14** through the input card of the upper fan's controller **17**, and, next, through the upper fan's controller **15**, and the internal and external temperature sensors **12** and **13** are connected with the system's controlling & working unit **14** through the input card of the lower fan's controller **18**, and, next, through the lower fan's controller **16**.

2. The system according to Claim 1, **wherein,** the upper and lower pressure sensors **8** and **9**, placed in the upper and lower air admitting ducts **6** and **7**, are connected with the system's controlling & working unit **14** through the input card of the upper fan's controller **17**, and, next, through the upper fan's controller **15**, and the internal and external temperature sensors **12** and **13** are connected with the system's controlling & working unit **14** through the input card of the upper fan's controller **17**, and, next, through the upper fan's controller **15**.

3. The system according to Claim 1, **wherein,** the upper and lower pressure sensors **8** and **9**, placed in the upper and lower air admitting ducts **6** and **7**, are connected with the system's controlling & working unit **14** through the input card of the lower fan's controller **18**, and, next, through the lower fan's controller **16**, and the internal and external temperature sensors **12** and **13** are connected with the system's controlling & working unit **14** through the input card of the lower fan's controller **18**, and, next, through the upper fan's controller **16**.

4. The system according to Claim 1, **wherein,** the upper and lower pressure sensors **8** and **9**, placed in the upper and lower air admitting ducts **6** and **7**, are connected with the system's controlling & working unit **14** through the input card of the lower fan's controller **18**, and, next, through the lower fan's controller **16**, and the internal and external temperature sensors **12** and **13** are connected with the system's controlling & working unit **14** through the input card of the upper fan's controller **17**, and, next, through the upper fan's controller **15**.

5. The system according to Claims 1 and/or 2, and to Claims 3 and/or 4, **wherein,** provided the value of external temperature is higher than the value of internal temperature, the system activates the blowing function of the reversible upper fan **4** and of the upper pressure-regulating governor **3**, and the exhaust function of the reversible lower fan **5** and of the lower pressure-regulating governor **2**.

6. The system according to Claims 1 and/or 2, and to Claims 3 and/or 4, **wherein,** provided the value of external temperature is lower than or equal the value of internal temperature, the system activates the exhaust function of the reversible upper fan **4** and of the upper pressure-regulating governor **3**, and the blowing function of the reversible lower fan **5** and of the lower pressure-regulating governor **2**.

7. The system according to Claims 1 and/or 2, and to Claims 3 and/or 4, **wherein,** the air flow inside the vertical evacuation route **1** is controlled and adjusted based on the information acquired from the sensors of the internal and external temperature **12** and **13**, respectively, as well as from the upper and lower pressure-regulating governors **2** and **3**, respectively, since this information forces a preset distribution of pressures not exceeding 50 Pa +/-10%.
